# EUROPÄISCHE PATENTSCHRIFT

(11) **EP 3 744 501 B1**
(45) Veröffentlichungstag und Bekanntmachung des Hinweises auf die Patenterteilung: **27.07.2022**
(21) Anmeldenummer: 20176469.3
(22) Anmeldetag: 26.05.2020
(51) Int. Cl.: B29C 51/34, B29C 51/08, B65D 1/26, B29L 31/00, B65D 21/02

(54) **WERKZEUG UND VERFAHREN ZUR HERSTELLUNG EINES BEHÄLTERS**
TOOL AND METHOD FOR PRODUCING A CONTAINER
OUTIL ET PROCÉDÉ DE FABRICATION D'UN RÉCIPIENT

(30) Priorität: 28.05.2019 DE 102019207818
(43) Veröffentlichungstag der Anmeldung: 02.12.2020
(60) Teilanmeldung: 21163359.9
(73) Patentinhaber: Variotech GmbH, 48529 Nordhorn (DE)
(72) Erfinder: ZEITEL, Eric, 49828 Neuenhaus (DE)
(74) Vertreter: Liedtke & Partner Patentanwälte

(56) Entgegenhaltungen:
- EP-A1- 2 641 722
- DE-A1- 3 814 999
- DE-A1- 19 927 069
- JP-A- H08 127 059
- US-A- 5 198 244

## Beschreibung

Die Erfindung betrifft ein Werkzeug zur Herstellung eines Behälters.

Die Erfindung betrifft weiterhin ein Verfahren zur Herstellung eines Behälters.

Aus der DE 199 64 255 C2 ist ein Transportbehälter aus Kunststoff mit einem Boden und einer materialeinheitlich mit dem Boden ausgebildeten, umlaufenden Seitenwand sowie über eine Außenkontur der Seitenwand um die gesamte Behälteraußenseite umlaufend vorstehenden Flanschen bekannt. Die Flansche schließen an ihrer Unterseite mit der Seitenwand einen Winkel ein, der kleiner als 90 ° ist, und sind als nach innen offene Nut ausgebildet.

Weiterhin ist aus der DE 199 27 069 C2 ein als Tiefziehkunststoffteil ausgebildeter Transportbehälter aus Kunststoff mit einem Boden und einer materialeinheitlich mit dem Boden ausgebildeten, umlaufenden Seitenwand bekannt. Der Transportbehälter umfasst einen über eine Außenkontur der Seitenwand um eine gesamte Behälteraußenseite umlaufend vorstehenden, als Hohlprofil ausgebildeten Flansch. Der Flansch ist zu einer Behälterinnenseite hin nach innen als offene Nut ausgebildet und vom Boden beabstandet angeordnet. Eine sich nach unten an den Flansch anschließende Seitenwand ist mindestens um eine Wandstärke der Seitenwand zurückversetzt und der Flansch schließt an seiner Unterseite mit der Seitenwand einen Winkel ein, der kleiner als 90 ° ist. Am oberen Randbereich der Seitenwand ist ein einfacher umlaufender Flansch vorgesehen, welcher an seiner Unterseite mit der Außenwand einen Winkel einschließt, der kleiner als 90 ° ist.

Die DE 38 14 999 A1 beschreibt eine Vorrichtung zum Tiefziehen von stapelbaren Paletten, die einen Boden und unter einem Winkel zur Vertikalen geneigt verlaufende Wände aufweisen, die an ihrer Oberkante in einen Absatz als Auflager für den Boden einer darüber befindlichen weiteren Palette auslaufen. Die Vorrichtung umfasst ein quaderförmiges Werkzeug, dessen Oberfläche eine zum Inneren der Paletten komplementäre Form aufweist. Weiterhin umfasst die Vorrichtung Mittel zum Überstülpen und Niederhalten einer erweichten Kunststoffplatte auf dem Werkzeug. Das Werkzeug ist an seinen oberen Kanten mit simsartig überstehenden Leisten zur Ausbildung von hinterschnittenen umlaufenden Ringwülsten am Rande des Bodens versehen, wobei die Leisten um zu ihrer Längserstreckung parallele Achsen derart verschwenkbar sind, dass die Leisten beim Ausformen der Paletten verschwenkt werden und aus den Hinterschneidungen herausgleiten.

Weiterhin beschreibt die US 5 198 244 A ein Werkzeug zum Tiefziehen von Formteilen, welches ein Gehäuse, ein Vorsprungsformelement, das beweglich an dem Gehäuse montiert ist, und eine versetzt montierte Feder umfasst. Das Vorsprungsformelement ist in Bezug auf das Gehäuse zwischen einer verriegelten Konfiguration und einer schwenkbaren Konfiguration beweglich. In seiner verriegelten Konfiguration wird das Vorsprungsformelement sicher in einer hervorstehenden Position gehalten, in der es aus dem Gehäuse herausragt. In dieser Position kann ein Abschnitts des tiefgezogenen Formteils um das Vorsprungsformelement geformt werden, um einen gewünschten Vorsprung in dem zu bildenden Formteil zu bilden. Nachdem das Formen abgeschlossen ist, wird durch Entfernen des Formteils das Vorsprungsformelement in eine zweite Schwenkkonfiguration überführt, in der das Vorsprungsformelement in das Gehäuse geschwenkt ist, damit das Formteil vollständig entfernt werden kann. Eine weitere Bewegung des Formteils vom Werkzeug weg bewirkt dann, dass das Vorsprungsformelement in das Gehäuse schwenkt, wodurch das Formteil vollständig entfernt werden kann. Nachdem das Formteil entfernt wurde, bewirkt die versetzte montierte Feder, dass das hervorstehende Vorsprungsformelement in seine hervorstehende Position zurückgeführt und in dieser Position verriegelt wird.

Die JP H08 127059 A beschreibt ein Werkzeug zur Ausformung eines Bauteils mit einem Hinterschnitt. Das Werkzeug umfasst eine Form mit einer Hauptform und einer Hilfsform, welche in Bezug auf die Hauptform beweglich angeordnet ist und eine Hohlraumoberfläche aufweist, an der eine Hinterschnittform ausgebildet ist.

Weiterhin beschreibt die EP 2 641 722 A1 eine Form-Vorrichtung zur Vakuum-Formung von Trägerplatten für flexible Rohre von Plattenheizkörpern, bestehend aus einem zylindrischen, oder mit abgerundetem Querschnitt versehenem, Grundkörper, welcher im unteren Bereich einen vorstehenden Rand und einen Schaft zwecks Einsatz in eine Grundplatte aufweist und im oberen Bereich einen Sitz für eines der beiden Enden eines beweglichen Vorsprungelements aufweist. Das Vorsprungelement ist mit einem der beiden Enden in ihrem jeweiligen Sitz am Grundkörper gelagert, um aus einer Arbeitsstellung in eine Ausraststellung schwenken zu können. Die Arbeitsstellung des Vorsprungelements ist durch eine Rückhaltevorrichtung gesichert, welche axial verschiebbar im Inneren der Form-Vorrichtung gelagert ist. Die Rückhalteplatte dieser Rückhaltevorrichtung ist in Rückhaltestellung vollständig oder teilweise in einen entsprechenden Sitz, welcher in der oberen Fläche des Grundkörpers und an den Vorsprungelementen vorgesehen ist, eingelassen.

Der Erfindung liegt die Aufgabe zu Grunde, ein neuartiges Werkzeug zur Herstellung eines Behälters und ein neuartiges Verfahren zur Herstellung eines Behälters anzugeben.

Die Aufgabe wird erfindungsgemäß gelöst durch ein Werkzeug, welches die im Anspruch 1 angegebenen Merkmale aufweist, und durch ein Verfahren, welches die im Anspruch 3 angegebenen Merkmale aufweist.

Vorteilhafte Ausgestaltungen der Erfindung sind Gegenstand der Unteransprüche.

Das erfindungsgemäße Werkzeug zur Herstellung eines Behälters aus Kunststoff in einem Thermoformprozess, insbesondere Kunststofftiefziehprozess, umfasst eine Positivform. Die Positivform umfasst einen Bodenabschnitt zur Ausbildung eines Behälterbodens, einen Seitenwandabschnitt zur Ausbildung einer materialeinheitlich mit dem Boden ausgebildeten, umlaufenden Seitenwand und eine Wand zur Ausbildung eines über eine Außenkontur der Seitenwand des Behälters um eine gesamte Behälteraußenseite umlaufend vorstehenden, als Hohlprofil ausgebildeten Stapelrands, welcher zu einer Behälterinnenseite hin nach innen als offene Nut ausgebildet und vom Boden beabstandet angeordnet ist. Die Wand ist in einer Formposition zur Formung des Behälters um eine gesamte Außenseite der Positivform umlaufend abragend angeordnet, wobei zwischen einer zu dem Bodenabschnitt gerichteten Wandseite und einem sich ausgehend von dieser Wandseite in Richtung des Bodenabschnitts verlaufenden Bereich des zugehörigen Seitenwandabschnitts ein Winkel ausgebildet ist, der kleiner als 90 ° ist. Zusätzlich ist die Wand, welche beispielsweise als umlaufender Wandbereich ausgebildet ist, von der Formposition in eine Entformposition bewegbar, wobei in der Entformposition ein Abstand eines in der Formposition abragenden Endes der Wand zu dem Seitenwandabschnitt verringert ist.

Mittels des Werkzeugs ist ein Behälter, insbesondere ein Transportbehälter, in einem Thermoformprozess, insbesondere Kunststofftiefziehprozess, herstellbar, welcher zumindest einen als nach innen offene Nut ausgebildeten Stapelrand umfasst. Dabei ermöglicht die Bewegung der Wand in die Entformposition eine Freigabe des Stapelrands während der Entformung und somit in besonders einfacher Weise eine Entformung des Behälters ohne Beschädigung oder Zerstörung des Stapelrands.

Die Wand umfasst mehrere als Schieber ausgebildete Wandsegmente, welche ausgehend von der Formposition in ein Inneres der Positivform verschiebbar sind. Derart verschiebbare Wandsegmente ermöglichen eine vollständige Freigabe des Stapelrands, d. h. der nach innen gerichteten Nut, bei der Entformung des Behälters, wobei keine Verformung des Stapelrands zur Entformung erforderlich ist.

Weiterhin sind an Ecken des Seitenwandabschnitts angeordnete Wandsegmente als Schwerkraftschieber ausgebildet, welche in der Formposition vom Seitenwandabschnitt und angrenzenden Schiebern gesperrt sind und nach einer Verschiebung von angrenzenden Schiebern in das Innere der Positivform derart freigegeben sind, dass diese sich bei der Entformung selbsttätig aufgrund der Gewichtskraft in das Innere der Positivform, beispielsweise in eine Ausgangsposition, bewegen. Diese Ausgestaltung ermöglicht eine besonders zuverlässige Herstellung des Behälters mit dem Stapelrand aufgrund einer besonders zuverlässigen und sicheren Positionierung der Wandsegmente während der Formung und eine zuverlässige und technisch einfach realisierbare Freigabe des Stapelrands, d. h. der nach innen gerichteten Nut, bei der Entformung des Behälters.

In einer möglichen Ausgestaltung des Werkzeugs sind die Schieber jeweils mit einem motorischen, hydraulischen und/oder pneumatischen Antrieb zur Ausführung der Verschiebung gekoppelt. Somit ist eine komfortabel ausführbare und schnelle Bewegung der Schieber mit einem definierten Bewegungsablauf realisierbar.

In einer nicht zur Erfindung gehörigen Ausgestaltung des Werkzeugs umfasst die Wand mehrere Wandsegmente, welche jeweils schwenkbar an dem Seitenwandabschnitt angeordnet sind. Eine Bewegung der Wandsegmente ist in der Formposition in Formrichtung, welche ausgehend vom Bodenabschnitt entlang des Seitenwandabschnitts verläuft, gesperrt. Dagegen ist die Bewegung in Entformrichtung, welche entgegengesetzt zur Formrichtung verläuft, freigegeben. Somit kann einerseits die Thermoformung bei Sicherstellung einer Sollposition der Wand realisiert werden und andererseits werden die Wandsegmente bei Bewegung des Behälters in Entformrichtung, d. h. bei einer Rückwärtsbewegung, derart verschwenkt, dass diese den Stapelrand, d. h. die nach innen gerichtete Nut, freigeben.

In einer nicht zur Erfindung gehörigen Ausgestaltung des Werkzeugs sind die schwenkbaren Wandsegmente jeweils mit zumindest einer Feder gekoppelt, welche eine Kraft entgegen einer Schwenkrichtung auf die Wandsegmente ausübt. Die erzeugte Federkraft ermöglicht in besonders zuverlässiger und einfacher Weise eine Sicherstellung der Formposition der Wand während der Formung des Behälters und eine zuverlässige und selbsttätige Rückkehr der Wand in diese Formposition nach der Entformung des Behälters.

In dem erfindungsgemäßen Verfahren zur Herstellung eines Behälters mittels eines zuvor beschriebenen Werkzeugs wird in einem Thermoformprozess, insbesondere Kunststofftiefziehprozess, ein aus thermoplastischem Kunststoff gebildeter Rohling erwärmt. Anschließend wird der Rohling mittels der Positivform umgeformt, wobei am Bodenabschnitt der Positivform ein Behälterboden aus dem Rohling geformt wird, an einem Seitenwandabschnitt eine materialeinheitlich mit dem Boden ausgebildete, umlaufende Seitenwand geformt wird und an einer an dem Seitenwandabschnitt angeordneten Wand ein über eine Außenkontur der Seitenwand des Behälters um eine gesamte Behälteraußenseite umlaufend vorstehender, als Hohlprofil ausgebildeter Stapelrand, welcher zu einer Behälterinnenseite hin nach innen als offene Nut ausgebildet und vom Boden beabstandet angeordnet ist, geformt wird. Die Wand wird während des Formens des Rohlings zu dem Behälter in einer Formposition um eine gesamte Außenseite der Positivform umlaufend abragend derart angeordnet, dass zwischen einer zu dem Bodenabschnitt gerichteten Wandseite und einem sich ausgehend von dieser Wandseite in Richtung des Bodenabschnitts verlaufenden Bereich des zugehörigen Seitenwandabschnitts ein Winkel ausgebildet ist, der kleiner als 90 ° ist. Weiterhin wird die Wand nach dem Formen des Rohlings in eine Entformposition bewegt, in welcher ein Abstand eines in der Formposition abragenden Endes der Wand zu dem Seitenwandabschnitt verringert ist.

Mittels des Verfahrens ist ein Behälter, insbesondere ein Transportbehälter, in einem Thermoformprozess, insbesondere Kunststofftiefziehprozess, herstellbar, welcher zumindest einen als nach innen offene Nut ausgebildeten Stapelrand umfasst. Dabei ermöglicht die Bewegung der Wand in die Entformposition eine Freigabe des Stapelrands während eines Entformprozesses und somit in besonders einfacher Weise eine Entformung des Behälters ohne Beschädigung oder Zerstörung des Stapelrands.

Dabei umfasst die Wand mehrere als Schieber ausgebildete Wandsegmente, welche nach dem Formen des Rohlings ausgehend von der Formposition in ein Inneres der Positivform verschoben werden. An Ecken des Seitenwandabschnitts angeordnete Wandsegmente sind als Schwerkraftschieber ausgebildet, welche in der Formposition vom Seitenwandabschnitt und angrenzenden Schiebern gesperrt sind und nach einer Verschiebung von angrenzenden Schiebern in das Innere der Positivform derart freigegeben sind, dass diese sich bei der Entformung selbsttätig aufgrund der Gewichtskraft in das Innere der Positivform bewegen.

In einer möglichen Ausgestaltung des Verfahrens wird der Behälter vor der Entformung auf eine Temperatur abgekühlt, welche zumindest im Bereich des Stapelrands eine elastische Verformung des Behälters zulässt. Somit kann eine plastische Verformung des Stapelrands bei der Entformung des Behälters und daraus folgend eine Beschädigung desselben vermieden werden.

In einer weiteren möglichen Ausgestaltung des Verfahrens wird die Bewegung der Wand in die Entformposition mittels zumindest eines motorischen, hydraulischen und/oder pneumatischen Antriebs durchgeführt. Somit ist eine komfortabel ausführbare und schnelle Bewegung der Schieber mit einem definierten Bewegungsablauf realisierbar.

In einer nicht zur Erfindung gehörigen Ausgestaltung des Verfahrens wird die Bewegung der Wand in die Entformposition bei einer Entformung des Behälters von der Positivform mittels des Behälters geführt. Hierdurch wird erreicht, dass an einer definierten Position des Behälters während der Entformung stets die gleiche relative Position der Wandsegmente zu dem Behälter sichergestellt werden kann und somit stets ein gleichbleibendes Ergebnis und daraus eine gleichbleibende Qualität erreicht werden kann.

Ausführungsbeispiele der Erfindung werden im Folgenden anhand von Zeichnungen näher erläutert.

Darin zeigen:
- Figur 1: schematisch eine Schnittdarstellung eines Behälters,
- Figur 2: schematisch einen vergrößerten Ausschnitt der Schnittdarstellung gemäß Figur 1,
- Figur 3: schematisch eine perspektivische Ansicht eines ersten Ausführungsbeispiels eines Werkzeugs,
- Figur 4: schematisch eine Schnittdarstellung des Werkzeugs gemäß Figur 1 und eines in dem Werkzeug angeordneten Behälters in einer ersten Position,
- Figur 5: schematisch eine Schnittdarstellung des Werkzeugs gemäß Figur 1 und eines in dem Werkzeug angeordneten Behälters während eines Entformvorgangs in einer zweiten Position,
- Figur 6: schematisch eine Schnittdarstellung des Werkzeugs gemäß Figur 1 und eines in dem Werkzeug angeordneten Behälters während eines Entformvorgangs in einer dritten Position,
- Figur 7: schematisch eine Schnittdarstellung des Werkzeugs gemäß Figur 1 und eines in dem Werkzeug angeordneten Behälters während eines Entformvorgangs in einer vierten Position,
- Figur 8: schematisch eine perspektivische Ansicht eines zweiten Ausführungsbeispiels eines Werkzeugs in einer Formposition,
- Figur 9: schematisch eine perspektivische Ansicht des Werkzeugs gemäß Figur 8 ohne Darstellung eines Bodenabschnitts und
- Figur 10: schematisch eine perspektivische Ansicht des Werkzeugs gemäß Figur 8 in einer Entformposition ohne Darstellung eines Bodenabschnitts.

Einander entsprechende Teile sind in allen Figuren mit den gleichen Bezugszeichen versehen.

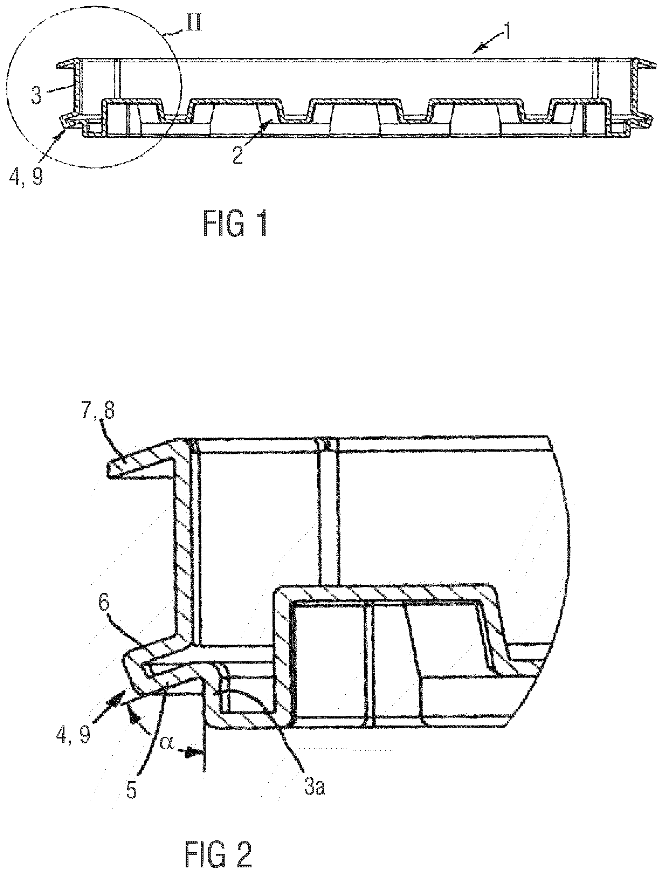

In **Figur 1** ist eine Schnittdarstellung eines möglichen Ausführungsbeispiels eines Behälters 1 gezeigt. **Figur 2** zeigt einen vergrößerten Ausschnitt der Schnittdarstellung gemäß Figur 1.

Der Behälter 1 ist beispielsweise als Transport- oder Verpackungsbehälter ausgebildet und umfasst einen Behälterboden 2, dessen Eigenschaften an ein zu transportierendes Gut angepasst sind. Beispielsweise ist der Behälterboden 2 derart profiliert, dass dieser so genannte Nester umfasst, die ein rutschsicheres und beschädigungsfreies Transportieren des einzugebenden Gutes ermöglichen. Der Behälterboden 2 kann je nach Anforderung jedoch auch andere Eigenschaften aufweisen, beispielsweise eben ausgebildet sein.

An den Behälterboden 2 schließt sich materialeinheitlich umlaufend eine Seitenwand 3 an, die im dargestellten Ausführungsbeispiel des Behälters 1 im oberen Bereich in einem Flansch 7 endet, der um den ganzen Behälter 1 umlaufend materialeinheitlich ausgebildet ist und über eine Außenseite der Seitenwand 3 vorsteht. Der Flansch 7 bildet dabei einen Stapelrand 8.

Im unteren Bereich des Behälters 1 ist ein weiterer nach außen vorstehender Flansch 4 ausgebildet, der als nach innen offene Nut ausgebildet ist und damit eine Oberseite 6 und eine Unterseite 5 aufweist. Ein in diesem Bereich von dem Flansch 4 nach unten vorstehender Abschnitt 3a der Seitenwand 3 ist um ein Maß gegenüber der übrigen Seitenwand 3 zurückversetzt, was mindestens einer Materialstärke bzw. Materialdicke der Seitenwand 3 entspricht, jedoch in einer möglichen Ausgestaltung etwas größer ist, so dass ein problemloses verklemmungsfreies Stapeln mehrerer Behälter 1 übereinander und abschnittsweise ineinander möglich ist.

Der Flansch 4 ist an seiner Unterseite 5 gegenüber dem sich anschließenden Abschnitt 3a der Seitenwand 3 geneigt und schließt mit dem Abschnitt 3a der Seitenwand 3 einen Winkel α ein, der kleiner als 90 ° ist.

Auch der Flansch 7 schließt einen Winkel ein, der kleiner als 90 ° ist, so dass sich der Flansch 7 beim Stapeln mehrerer Behälter 1 mit seiner Oberseite unter die Unterseite 5 des Flansches 4 legt, wodurch ein staub- und spritzwasserdichter Anschluss der einzelnen Behälter 1 beim Stapeln erreicht wird. Der Flansch 4 bildet somit auch einen Stapelrand 9.

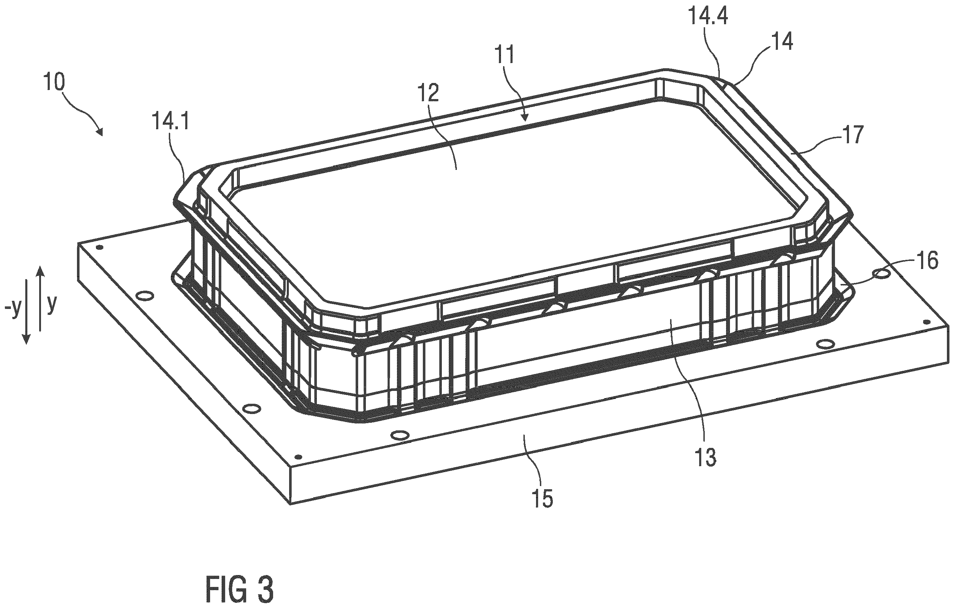

In **Figur 3** ist eine perspektivische Ansicht eines möglichen Ausführungsbeispiels eines nicht zur Erfindung gehörigen Werkzeugs 10 zur Herstellung eines in den Figuren 1 und 2 gezeigten Behälters 1 dargestellt.

Die Herstellung des Behälters 1 erfolgt mittels des Werkzeugs 10 in einem Thermoformprozess aus einem aus Kunststoff gebildeten Rohling, insbesondere in einem Kunststofftiefziehprozess.

Für diesen Thermoformprozess umfasst das Werkzeug 10 eine Positivform 11 mit einem Bodenabschnitt 12 zur Ausbildung des Behälterbodens 2.

Die Positivform 11 umfasst weiterhin einen Seitenwandabschnitt 13zur Ausbildung der materialeinheitlich mit dem Behälterboden 2 ausgebildeten, umlaufenden Seitenwand 3.

Weiterhin umfasst die Positivform 11 eine Wand 14 zur Ausbildung des über die Außenkontur der Seitenwand 3 des Behälters 1 um die gesamte Behälteraußenseite umlaufend vorstehenden, als Hohlprofil ausgebildeten Stapelrands 9, welcher zur Behälterinnenseite hin nach innen als offene Nut ausgebildet und vom Behälterboden 2 beabstandet angeordnet ist.

Zusätzlich umfasst die Positivform 11 eine Grundplatte 15, von welcher ausgehend der Seitenwandabschnitt 13 zumindest im Wesentlichen senkrecht nach oben abragt. In einem Übergangsbereich zwischen der Grundplatte 15 und dem Seitenwandabschnitt 13 ist eine umlaufende Vertiefung 16 zur Ausbildung des oberen Stapelrands 8 des Behälters 1 angeordnet.

Zur Herstellung des Behälters 1 wird zunächst der nicht näher dargestellte und aus Kunststoff, insbesondere thermoplastischem Kunststoff, gebildete Rohling derart erwärmt, dass dieser verformbar ist. Die Erwärmung erfolgt dabei beispielsweise mittels nicht näher dargestellter externer Wärmequellen.

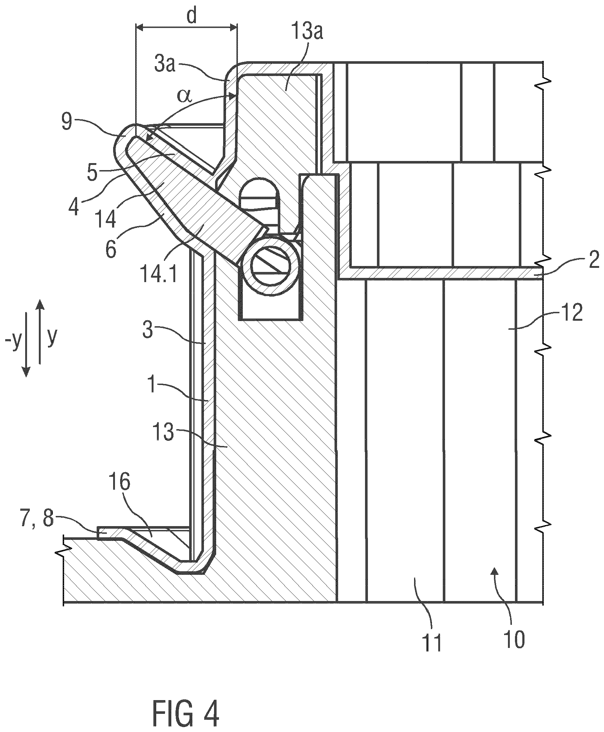

Anschließend wird der Rohling mittels Unterdruck und/oder einem nicht dargestellten Stempel derart umgeformt, dass der Kunststoff über die Positivform 11 gezogen wird und deren Außenkontur eine Innenkontur des erzeugten Behälters 1 bildet. Hierbei wird der untere Flansch 4, d. h. dessen nach innen und somit zur Positivform 11 gerichtete Nut, mittels der abragenden Wand 14 gebildet. Zu diesem Zweck ist die Wand 14 in einer Formposition zur Formung des Behälters 1 um eine gesamte Außenseite der Positivform 11 umlaufend abragend angeordnet. Zwischen einer zu dem Bodenabschnitt 12 gerichteten Wandseite 17, an welcher sich die Unterseite 5 des Stapelrands 9 ausbildet, und einem sich ausgehend von dieser Wandseite 17 in Richtung des Bodenabschnitts 12 verlaufenden Bereich 13a des zugehörigen Seitenwandabschnitts 13 ist der Winkel α ausgebildet, der kleiner als 90 ° ist. Dies ist in Figur 4 näher dargestellt.

Um eine Entformung des Behälters 1 von der Positivform 11 ohne Beschädigung des Behälters 1, insbesondere im Bereich des Stapelrands 9 zu ermöglichen, ist die Wand 14 beweglich ausgebildet und wird bei der Entformung von der Formposition in zumindest eine Entformposition bewegt, in welcher ein Abstand d eines in der Formposition abragenden Endes der Wand 14 zu dem Seitenwandabschnitt 13 verringert ist, um den umlaufenden Stapelrand 9 während der Entformung des Behälters 1 freizugeben.

Hierzu umfasst die Wand 14 mehrere Wandsegmente 14.1 bis 14.n, im dargestellten Ausführungsbeispiel acht Wandsegmente 14.1 bis 14.n, welche jeweils schwenkbar bzw. klappbar an dem Seitenwandabschnitt 13 angeordnet sind. Eine Anzahl der schwenkbaren Wandsegmente 14.1 bis 14.n zur Ausbildung des Stapelrands 9 ist abhängig von der Außenkontur des zu erzeugenden Behälters 1.

Eine Bewegung der Wandsegmente 14.1 bis 14.n ist in der Formposition in Formrichtung Y, welche ausgehend vom Bodenabschnitt 12 entlang des Seitenwandabschnitts 13 verläuft, gesperrt und in Entformrichtung -Y, welche entgegengesetzt zur Formrichtung Y verläuft, freigegeben. Mit anderen Worten: Die Wandsegmente 14.1 bis 14.n sind in Formrichtung Y auf Position geblockt und verharren beim eigentlichen Tiefziehprozess auch in dieser Position. In der Rückwärtsbewegung, d. h. in Entformrichtung -Y, bewegen sich diese dann gelenkig mit und geben den Stapelrand 9 wieder frei. Die Formrichtung Y und die Entformrichtung -Y beziehen sich dabei vorliegend auf eine relative Bewegung des Rohlings bzw. Behälters 1 zum Werkzeug 10, betreffen jedoch nicht zwingend absolute Bewegungsrichtungen, welche mit dem Rohling bzw. dem Behälter 1 und dem Werkzeug 10 ausgeführt werden.

Zu diesem Verharren sind die schwenkbaren Wandsegmente 14.1 bis 14.n in einer nicht näher dargestellten möglichen Ausgestaltung jeweils mit zumindest einer Feder gekoppelt, welche eine Kraft entgegen ihrer Schwenkrichtung auf das entsprechende Wandsegment 14.1 bis 14.n ausübt.

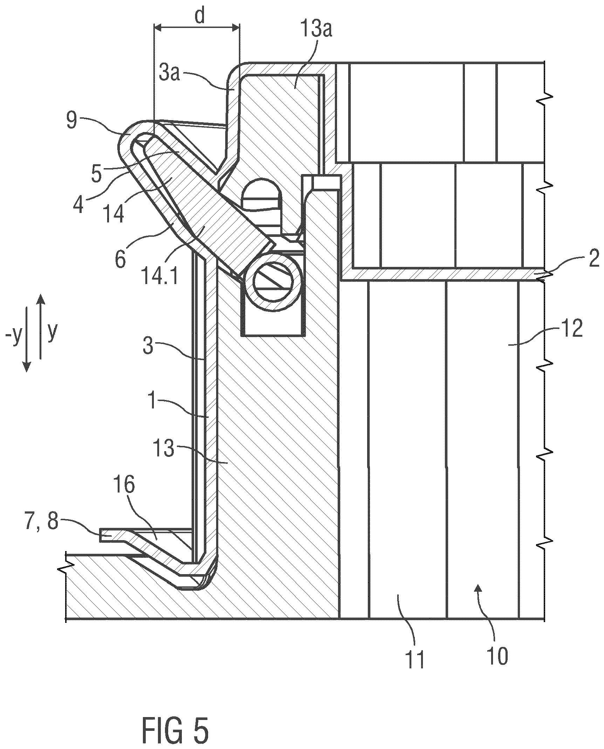

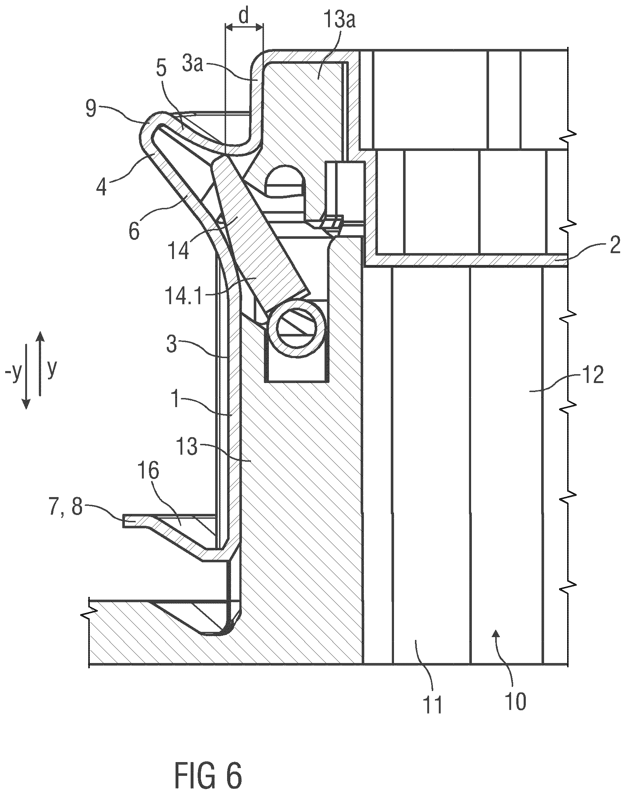

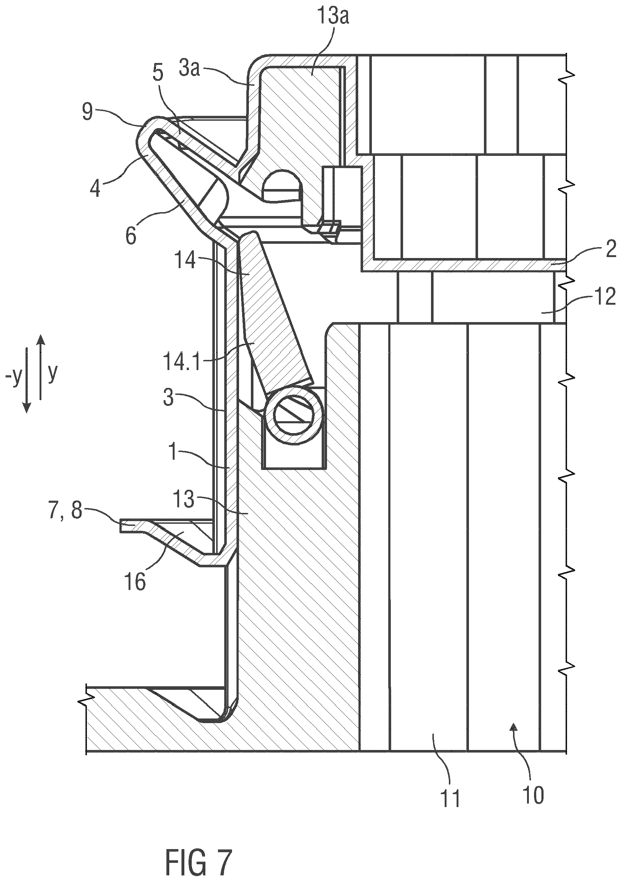

Die **Figuren 4 bis 7** zeigen Schnittdarstellungen des Werkzeugs 10 gemäß Figur 3 und des in dem Werkzeug 10 angeordneten Behälters 1 nach dessen Formung und in verschiedenen Positionen während dessen Entformung.

Die Darstellungen dieser Figuren verdeutlichen dabei die Bewegung der Wandsegmente 14.1 bis 14.n am Beispiel des Wandsegments 14.1. Hierbei bewegt sich das Wandsegment 14.1 bei der Entformung des Behälters 1 in der dargestellten Weise, wobei die Bewegung der Wand 14 in die Entformposition bei der Entformung des Behälters 1 mittels des Behälters 1 selbst geführt wird. Um eine Beschädigung des Behälters 1 im Bereich des Stapelrands 9 zu vermeiden, wird der Behälter 1 vor der Entformung auf eine Temperatur abgekühlt, welche zumindest im Bereich des Stapelrands 9 eine elastische Verformung des Behälters 1 zulässt. Somit kann sich der Stapelrand 9 beim Herausgleiten der Wandsegmente 14.1 bis 14.n entsprechend einer Bewegung einer Außenkontur der Wandsegmente 14.1 bis 14.n verformen und anschließend wieder in seine Ausgangsform zurückkehren.

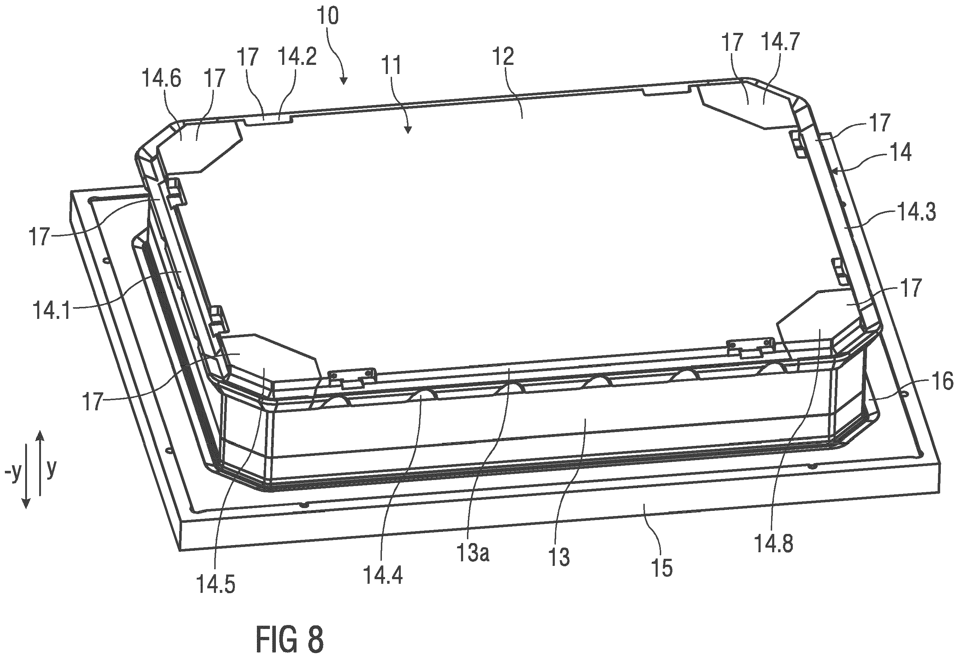

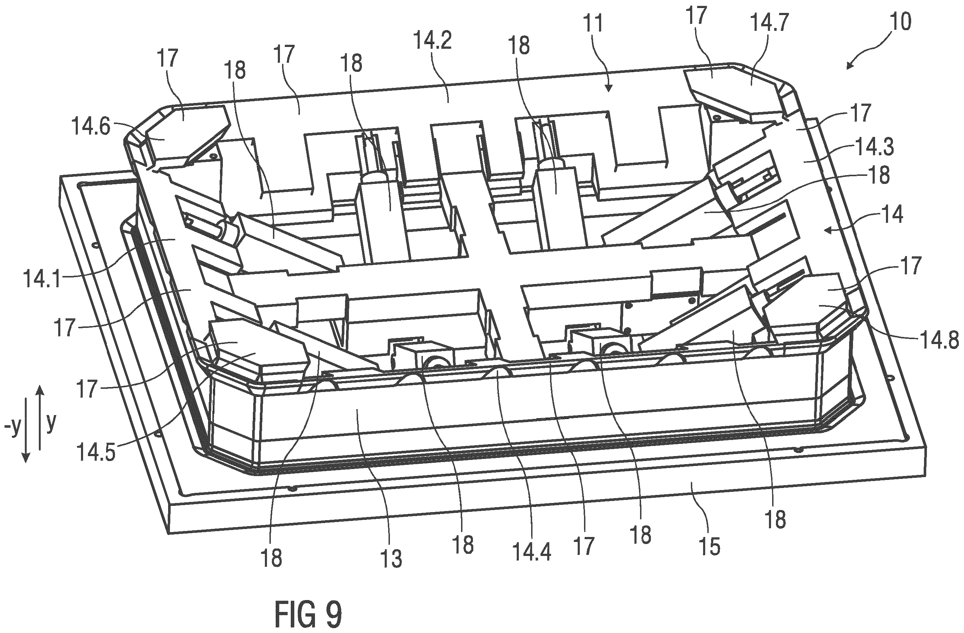

In **Figur 8** ist eine perspektivische Ansicht eines möglichen Ausführungsbeispiels eines Werkzeugs 10 zur Herstellung des Behälters 1 gemäß den Figuren 1 und 2 in einer Formposition dargestellt. **Figur 9** zeigt eine perspektivische Ansicht des Werkzeugs 10 gemäß Figur 8 ohne Darstellung eines Bodenabschnitts 12, um eine Sicht in das Innere des Werkzeugs 10 zu ermöglichen.

Im Unterschied zu dem in den Figuren 3 bis 7 dargestellten Ausführungsbeispiel des Werkzeugs 10 umfasst die Wand 14 zur Ausbildung des Stapelrands 9 mehrere als Schieber ausgebildete Wandsegmente 14.1 bis 14.8, welche ausgehend von ihrer Formposition, die der Formposition der in den Figuren 3 bis 7 entsprechenden Wandsegmente 14.1 bis 14.n entspricht, in ein Inneres der Positivform 11 verschiebbar sind.

Dabei sind vier Wandsegmente 14.1 bis 14.4 als schräg linear verschiebbare Schieber ausgebildet. Diese Schieber sind jeweils mit einem motorischen, hydraulischen und/oder pneumatischen Antrieb 18 zur Ausführung der Verschiebung gekoppelt.

An Ecken des Seitenwandabschnitts 13 angeordnete Wandsegmente 14.5 bis 14.8 sind als so genannte Schwerkraftschieber ausgebildet, welche in der Formposition vom Seitenwandabschnitt 13 und den angrenzenden Schiebern gesperrt sind und nach der linearen Verschiebung der angrenzenden Schieber in das Innere der Positivform 11 derart freigegeben sind, dass diese sich bei der Entformung selbsttätig aufgrund der Gewichtskraft in das Innere der Positivform 11, beispielsweise in eine Ausgangsposition, bewegen. Mit anderen Worten: In Formrichtung sind die linear verschiebbaren Schieber auf Position ausgefahren und die Schwerkraftschieber durch Rahmenanschläge geblockt. Diese verharren beim eigentlichen Tiefziehprozess auch in dieser Position.

Auch bei dieser Ausbildung des Werkzeugs 10 wird zur Herstellung des Behälters 1 zunächst der nicht näher dargestellte und aus Kunststoff, insbesondere thermoplastischem Kunststoff, gebildete Rohling derart erwärmt, dass dieser verformbar ist. Die Erwärmung erfolgt dabei beispielsweise mittels nicht näher dargestellter externer Wärmequellen.

Anschließend wird der Rohling mittels Unterdruck und/oder einem nicht dargestellten Stempel derart umgeformt, dass der Kunststoff über die Positivform 11 gezogen wird und deren Außenkontur eine Innenkontur des erzeugten Behälters 1 bildet. Hierbei wird der untere Flansch 4, d. h. dessen nach innen und somit zur Positivform 11 gerichtete Nut, mittels der abragenden Wand 14 gebildet. Zu diesem Zweck ist die Wand 14 in einer Formposition zur Formung des Behälters 1 um eine gesamte Außenseite der Positivform 11 umlaufend abragend angeordnet. Zwischen einer zu dem Bodenabschnitt 12 gerichteten Wandseite 17, an welcher sich die Unterseite 5 des Stapelrands 9 ausbildet, und einem sich ausgehend von dieser Wandseite 17 in Richtung des Bodenabschnitts 12 verlaufenden Bereich 13a des zugehörigen Seitenwandabschnitts 13 ist der Winkel α ausgebildet, der kleiner als 90 ° ist.

Zur Entformung des Behälters 1 werden dann zunächst die vier als linear verschiebbare Schieber ausgebildeten Wandsegmente 14.1 bis 14.4 nach innen in die Positivform 11 bewegt und geben die dargestellten Lang- und Kurzseiten des Stapelrands 9 frei. Hierbei wird weiterhin eine Bewegung der weiteren als Schwerkraftschieber ausgebildeten Wandsegmente 14.5 bis 14.8 freigegeben, so dass eine Bewegung des Behälters 1 in Entformrichtung -Y freigegeben ist. Bei der Entformung bewegen sich die Schwerkraftschieber aufgrund einer Kontaktreibung zu den Nuten des Stapelrands 9, welche Hinterschnittsflächen bilden, schräg nach innen mit der rückwärtigen Bewegung, so dass diese ab einem gewissen Weg den Hinterschnittbereich verlassen und der Behälter 1 vollständig frei und entformt ist.

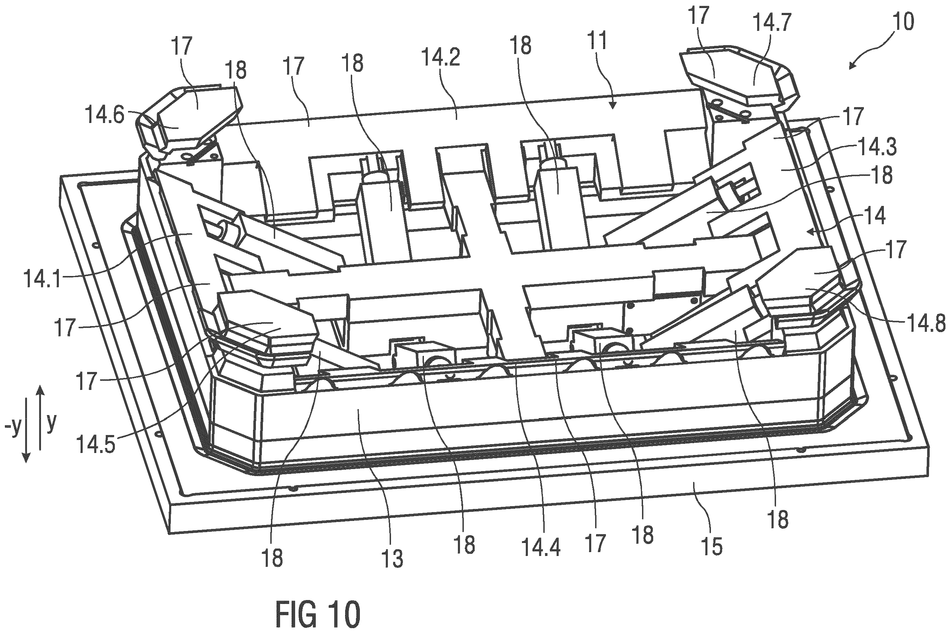

Einen solchen Zustand, in welchem die vier als linear verschiebbare Schieber ausgebildeten Wandsegmente 14.1 bis 14.4 nach innen in die Positivform 11 bewegt sind und die Lang- und Kurzseiten des Stapelrands 9 freigeben, zeigt **Figur 10****,** in welcher das Werkzeug 10 ohne Bodenabschnitt 12 dargestellt ist, um eine Sicht in das Innere des Werkzeugs 10 zu ermöglichen. Nach einer Bewegung der Wandsegmente 14.1 bis 14.4 in die dargestellte Position ist die Bewegung der weiteren als Schwerkraftschieber ausgebildeten Wandsegmente 14.5 bis 14.8 in das Innere des Werkzeugs 10 freigegeben.

### BEZUGSZEICHENLISTE

- 1: Behälter
- 2: Behälterboden
- 3: Seitenwand
- 3a: Abschnitt
- 4: Flansch
- 5: Unterseite
- 6: Oberseite
- 7: Flansch
- 8: Stapelrand
- 9: Stapelrand
- 10: Werkzeug
- 11: Positivform
- 12: Bodenabschnitt
- 13: Seitenwandabschnitt
- 13a: Bereich
- 14: Wand
- 14.1 bis 14.n: Wandsegment
- 15: Grundplatte
- 16: Vertiefung
- 17: Wandseite
- 18: Antrieb

- d: Abstand
- Y: Formrichtung
- -Y: Entformrichtung

- α: Winkel

## Patentansprüche

1. Werkzeug (10) zur Herstellung eines Behälters (1) aus Kunststoff in einem Thermoformprozess, insbesondere Kunststofftiefziehprozess, mit einer Positivform (11), umfassend
- einen Bodenabschnitt (12) zur Ausbildung eines Behälterbodens (2),
- einen Seitenwandabschnitt (13) zur Ausbildung einer materialeinheitlich mit dem Behälterboden (2) ausgebildeten, umlaufenden Seitenwand (3),
- eine Wand (14) zur Ausbildung eines über eine Außenkontur der Seitenwand (3) des Behälters (1) um eine gesamte Behälteraußenseite umlaufend vorstehenden, als Hohlprofil ausgebildeten Stapelrands (9), welcher zu einer Behälterinnenseite hin nach innen als offene Nut ausgebildet und vom Behälterboden (2) beabstandet angeordnet ist, wobei
- die Wand (14) in einer Formposition zur Formung des Behälters (1) um eine gesamte Außenseite der Positivform (11) umlaufend abragend angeordnet ist und zwischen einer zu dem Bodenabschnitt (12) gerichteten Wandseite (17) und einem sich ausgehend von dieser Wandseite (17) in Richtung des Bodenabschnitts (12) verlaufenden Bereich (13a) des zugehörigen Seitenwandabschnitts (13) ein Winkel (a) ausgebildet ist, der kleiner als 90 ° ist, und wobei
- die Wand (14) von der Formposition in eine Entformposition bewegbar ist, in welcher ein Abstand (d) eines in der Formposition abragenden Endes der Wand (14) zu dem Seitenwandabschnitt (13) verringert ist
, **dadurch gekennzeichnet, dass**
- die Wand (14) mehrere als Schieber ausgebildete Wandsegmente (14.1 bis 14.4) umfasst, welche ausgehend von der Formposition in ein Inneres der Positivform (11) verschiebbar sind und
- an Ecken des Seitenwandabschnitts (13) angeordnete Wandsegmente (14.5 bis 14.8) als Schwerkraftschieber ausgebildet sind, welche in der Formposition vom Seitenwandabschnitt (13) und angrenzenden, als Schieber ausgebildeten Wandsegmenten (14.1 bis 14.4) gesperrt sind und nach einer Verschiebung von angrenzenden, als Schieber ausgebildeten Wandsegmenten (14.1 bis 14.4) in das Innere der Positivform (11) derart freigegeben sind, dass diese sich bei der Entformung selbsttätig aufgrund der Gewichtskraft in das Innere der Positivform (11) bewegen.

2. Werkzeug (10) nach Anspruch 1, wobei die Schieber (14.1 bis 14.4) jeweils mit zumindest einem motorischen, hydraulischen und/oder pneumatischen Antrieb (18) zur Ausführung der Verschiebung gekoppelt sind.

3. Verfahren zur Herstellung eines Behälters mittels eines Werkzeugs (10) nach einem der vorhergehenden Ansprüche, wobei in einen Thermoformprozess, insbesondere Kunststofftiefziehprozess,
- ein aus thermoplastischem Kunststoff gebildeter Rohling erwärmt wird,
- der Rohling mittels der Positivform (11) umgeformt wird, wobei am Bodenabschnitt (12) der Positivform (11) ein Behälterboden (2) aus dem Rohling geformt wird, an einem Seitenwandabschnitt (13) eine materialeinheitlich mit dem Behälterboden (2) ausgebildete, umlaufende Seitenwand (3) geformt wird und an einer an dem Seitenwandabschnitt (13) angeordneten Wand (14) ein über eine Außenkontur der Seitenwand (3) des Behälters (1) um eine gesamte Behälteraußenseite umlaufend vorstehender, als Hohlprofil ausgebildeter Stapelrand (9), welcher zu einer Behälterinnenseite hin nach innen als offene Nut ausgebildet und vom Behälterboden (2) beabstandet angeordnet ist, geformt wird,
- die Wand (14) während des Formens des Rohlings zu dem Behälter (1) in einer Formposition um eine gesamte Außenseite der Positivform (11) umlaufend abragend derart angeordnet wird, dass zwischen einer zu dem Bodenabschnitt (12) gerichteten Wandseite (17) und einem sich ausgehend von dieser Wandseite (17) in Richtung des Bodenabschnitts (12) verlaufenden Bereich des zugehörigen Seitenwandabschnitts (13) ein Winkel (a) ausgebildet ist, der kleiner als 90 ° ist,
- die Wand (14) nach dem Formen des Rohlings in eine Entformposition bewegt wird, in welcher ein Abstand (d) eines in der Formposition abragenden Endes der Wand (14) zu dem Seitenwandabschnitt (13) verringert ist, **dadurch gekennzeichnet, dass**
- die Wand (14) mehrere als Schieber ausgebildete
Wandsegmente (14.1 bis 14.4) umfasst, welche nach dem Formen des Rohlings ausgehend von der Formposition in ein Inneres der Positivform (11) verschoben werden, und
- an Ecken des Seitenwandabschnitts (13) angeordnete Wandsegmente (14.5 bis 14.8) als Schwerkraftschieber ausgebildet sind, welche in der Formposition vom Seitenwandabschnitt (13) und angrenzenden, als Schieber ausgebildeten Wandsegmenten (14.1 bis 14.4) gesperrt sind und nach einer Verschiebung von angrenzenden, als Schieber ausgebildeten Wandsegmenten (14.1 bis 14.4) in das Innere der Positivform (11) derart freigegeben sind, dass diese sich bei der Entformung selbsttätig aufgrund der Gewichtskraft in das Innere der Positivform (11) bewegen.

4. Verfahren nach Anspruch 3, **dadurch gekennzeichnet dass** der Behälter (1) vor der Entformung auf eine Temperatur abgekühlt wird, welche zumindest im Bereich des Stapelrands (9) eine elastische Verformung des Behälters (1) zulässt.

5. Verfahren nach Anspruch 3 oder 4, **dadurch gekennzeichnet, dass** die Bewegung der Wand (14) in die Entformposition mittels zumindest eines motorischen, hydraulischen und/oder pneumatischen Antriebs (18) durchgeführt wird.

## Claims

1. Tool (10) for producing a container (1) composed of plastic in a thermoforming process, in particular a plastic deep-drawing process, with a positive mould (11), comprising
- a base section (12) for forming a container base (2),
- a side-wall section (13) for forming a peripheral side wall (3) which is formed to be of the same material as the container base (2),
- a wall (14) for forming a stacking edge (9) which is in the form of a hollow profile and which projects beyond an outer contour of the side wall (3) of the container (1) in a manner running around an entire container outer side and which, inwardly towards a container inner side, is in the form of an open groove and which is arranged spaced apart from the container base (2), wherein
- the wall (14), in a moulding position for moulding of the container (1), is arranged so as to protrude in a manner running around an entire outer side of the positive mould (11), and an angle (α) of less than 90° is formed between a wall side (17) directed towards the base section (12) and a region (13a), extending from this wall side (17) in the direction of the base section (12), of the associated side-wall section (13), and wherein
- the wall (14) is movable from the moulding position into a demoulding position, in which a distance (d) of an end, protruding in the moulding position, of the wall (14) from the side-wall section (13) is reduced,
**characterized in that**
- the wall (14) comprises multiple wall segments (14.1 to 14.4) which are in the form of slides and which, from the moulding position, are displaceable into an interior of the positive mould (11), and
- wall segments (14.5 to 14.8) arranged at corners of the side-wall section (13) are in the form of gravity slides, which, in the moulding position, are blocked by the side-wall section (13) and adjoining wall segments (14.1 to 14.4) in the form of slides and, after displacement of adjoining wall segments (14.1 to 14.4) in the form of slides into the interior of the positive mould (11), are released such that, during the demoulding, they move into the interior of the positive mould (11) of their own accord owing to the weight force.

2. Tool (10) according to Claim 1, wherein the slides (14.1 to 14.4) are in each case coupled to at least one motor-powered, hydraulic and/or pneumatic drive (18) for execution of the displacement.

3. Method for producing a container by means of a tool (10) according to one of the preceding claims, wherein, in a thermoforming process, in particular a plastic deep-drawing process,
- a blank formed from thermoplastic material is heated,
- the blank is subjected to forming by means of the positive mould (11), wherein a container base (2) is moulded from the blank at the base section (12) of the positive mould (11), a peripheral side wall (3) which is formed to be of the same material as the container base (2) is moulded at a side-wall section (13), and a stacking edge (9) which is in the form of a hollow profile and which projects beyond an outer contour of the side wall (3) of the container (1) in a manner running around an entire container outer side and which, inwardly towards a container inner side, is in the form of an open groove and which is arranged spaced apart from the container base (2) is moulded at a wall (14) arranged on the side-wall section (13),
- while the blank is being subjected to forming to form the container (1), the wall (14), in a moulding position, is arranged so as to protrude in a manner running around an entire outer side of the positive mould (11) such that an angle (α) of less than 90° is formed between a wall side (17) directed towards the base section (12) and a region, extending from this wall side (17) in the direction of the base section (12), of the associated side-wall section (13),
- after the blank has been subjected to forming, the wall (14) is moved into a demoulding position, in which a distance (d) of an end, protruding in the moulding position, of the wall (14) from the side-wall section (13) is reduced,
**characterized in that**
- the wall (14) comprises multiple wall segments (14.1 to 14.4) which are in the form of slides and which, after the blank has been subjected to forming, from the moulding position, are displaced into an interior of the positive mould (11), and
- wall segments (14.5 to 14.8) arranged at corners of the side-wall section (13) are in the form of gravity slides, which, in the moulding position, are blocked by the side-wall section (13) and adjoining wall segments (14.1 to 14.4) in the form of slides and, after displacement of adjoining wall segments (14.1 to 14.4) in the form of slides into the interior of the positive mould (11), are released such that, during the demoulding, they move into the interior of the positive mould (11) of their own accord owing to the weight force.

4. Method according to Claim 3, **characterized in that**, before the demoulding, the container (1) is cooled to a temperature which, at least in the region of the stacking edge (9), permits elastic deformation of the container (1).

5. Method according to Claim 3 or 4, **characterized in that** the movement of the wall (14) into the demoulding position is carried out by means of at least one motor-powered, hydraulic and/or pneumatic drive (18).

## Revendications

1. Outil (10) pour la fabrication d'un récipient (1) en matière plastique dans un processus de thermoformage, notamment un processus d'emboutissage profond de matière plastique, avec un moule positif (11), comprenant
- une section de fond (12) pour la réalisation d'un fond de récipient (2),
- une section de paroi latérale (13) pour la réalisation d'une paroi latérale circonférentielle (3), réalisée en un même matériau que le fond de récipient (2),
- une paroi (14) pour la réalisation d'un bord d'empilement (9) réalisé sous forme de profil creux, dépassant d'un contour extérieur de la paroi latérale (3) du récipient (1) circonférentiellement autour de tout un côté extérieur de récipient, lequel est réalisé sous forme de rainure ouverte vers l'intérieur vers un côté intérieur de récipient et est agencé à distance du fond de récipient (2),
- la paroi (14) étant agencée en saillie circonférentiellement autour de tout un côté extérieur du moule positif (11) dans une position de moulage pour le moulage du récipient (1) et un angle (α) étant formé entre un côté de paroi (17) dirigé vers la section de fond (12) et une zone (13a) de la section de paroi latérale (13) correspondante, s'étendant à partir de ce côté de paroi (17) en direction de la section de fond (12), qui est inférieur à 90°, et
- la paroi (14) pouvant être déplacée de la position de moulage dans une position de démoulage, dans laquelle une distance (d) entre une extrémité de la paroi (14) en saillie dans la position de moulage et la section de paroi latérale (13) est réduite,
**caractérisé en ce que**
- la paroi (14) comprend plusieurs segments de paroi (14.1 à 14.4) réalisés sous forme de coulisseaux qui peuvent être coulissés à partir de la position de moulage vers l'intérieur du moule positif (11) et
- des segments de paroi (14.5 à 14.8) agencés aux coins de la section de paroi latérale (13) sont réalisés sous forme de coulisseaux à gravité qui, dans la position de moulage, sont bloqués par la section de paroi latérale (13) et des segments de paroi adjacents (14.1 à 14.4) réalisés sous forme de coulisseaux, et sont libérés après un coulissement de segments de paroi adjacents (14.1 à 14.4) réalisés sous forme de coulisseaux vers l'intérieur du moule positif (11), de telle sorte que ceux-ci se déplacent automatiquement vers l'intérieur du moule positif (11) lors du démoulage en raison du poids.

2. Outil (10) selon la revendication 1, les coulisseaux (14.1 à 14.4) étant couplés chacun à au moins un entraînement motorisé, hydraulique et/ou pneumatique (18) pour effectuer le coulissement.

3. Procédé de fabrication d'un récipient au moyen d'un outil (10) selon l'une quelconque des revendications précédentes, dans un processus de thermoformage, notamment un processus d'emboutissage profond de matière plastique,
- une ébauche formée de matière plastique thermoplastique étant chauffée,
- l'ébauche étant déformée au moyen du moule positif (11), un fond de récipient (2) étant formé à partir de l'ébauche sur la section de fond (12) du moule positif (11), une paroi latérale circonférentielle (3) réalisée en un même matériau que le fond de récipient (2) étant formée sur une section de paroi latérale (13), et un bord d'empilement (9) réalisé sous forme de profil creux, dépassant d'un contour extérieur de la paroi latérale (3) du récipient (1) circonférentiellement autour de tout un côté extérieur de récipient, étant formé sur une paroi (14) agencée sur la section de paroi latérale (13), qui est réalisé sous forme de rainure ouverte vers l'intérieur vers un côté intérieur de récipient et qui est agencé à distance du fond de récipient (2),
- la paroi (14) étant agencée en saillie circonférentiellement autour de tout un côté extérieur du moule positif (11) pendant le moulage de l'ébauche pour former le récipient (1) dans une position de moulage, de telle sorte qu'un angle (α) est formé entre un côté de paroi (17) dirigé vers la section de fond (12) et une zone de la section de paroi latérale (13) correspondante, s'étendant à partir de ce côté de paroi (17) en direction de la section de fond (12), qui est inférieur à 90°,
- la paroi (14) étant déplacée, après le moulage de l'ébauche, dans une position de démoulage dans laquelle une distance (d) entre une extrémité de la paroi (14) faisant saillie dans la position de moulage et la section de paroi latérale (13) est réduite,
**caractérisé en ce que**
- la paroi (14) comprend plusieurs segments de paroi (14.1 à 14.4) réalisés sous forme de coulisseaux, qui sont coulissés après le moulage de l'ébauche à partir de la position de moulage vers l'intérieur du moule positif (11), et
- des segments de paroi (14.5 à 14.8) agencés aux coins de la section de paroi latérale (13) sont réalisés sous forme de coulisseaux à gravité, qui sont bloqués dans la position de moulage par la section de paroi latérale (13) et des segments de paroi adjacents (14.1 à 14.4) réalisés sous forme de coulisseaux et sont libérés après un coulissement de segments de paroi adjacents (14.1 à 14.4), réalisés sous forme de coulisseaux, vers l'intérieur du moule positif (11) de telle sorte que ceux-ci se déplacent automatiquement vers l'intérieur du moule positif (11) lors du démoulage en raison du poids.

4. Procédé selon la revendication 3, **caractérisé en ce que** le récipient (1) est refroidi avant le démoulage à une température qui permet une déformation élastique du récipient (1) au moins dans la zone du bord d'empilement (9) .

5. Procédé selon la revendication 3 ou 4, **caractérisé en ce que** le déplacement de la paroi (14) vers la position de démoulage est effectué au moyen d'au moins un entraînement motorisé, hydraulique et/ou pneumatique (18) .
